# EUROPÄISCHE PATENTSCHRIFT

(11) **EP 0 970 783 B1**
(45) Veröffentlichungstag und Bekanntmachung des Hinweises auf die Patenterteilung: **10.09.2003**
(21) Anmeldenummer: 99111623.7
(22) Anmeldetag: 16.06.1999
(51) Int. Cl.: B25J 17/02, B23P 19/02

(54) **Vorrichtung, insbesondere zum Positionieren und/oder Fügen oder Trennen von Bauteilen**
Apparatus for positioning and/or assembling and disassembling components
Appareil pour positionner et/ou assembler ou démonter des composants

(30) Priorität: 08.07.1998 DE 19830386
(43) Veröffentlichungstag der Anmeldung: 12.01.2000
(73) Patentinhaber: ROBERT BOSCH GMBH, 70442 Stuttgart (DE)
(72) Erfinder: Kaesser, Rainer, 71566 Althuette (DE)

(56) Entgegenhaltungen:
- DE-C- 19 620 195
- SCHWEIGERT U: "VIBRATIONSUNTERSTUETZUNG ERMOEGLICHT PRAEZISIONSMONTAGE" TECHNISCHE RUNDSCHAU,CH,HALLWAG VERLAG. BERN, Bd. 84, Nr. 6, 7. Februar 1992 (1992-02-07), Seiten 48-52, XP000247720 ISSN: 1023-0823

## Beschreibung

### Stand der Technik

Die Erfindung geht aus von einer Vorrichtung, insbesondere zum Positionieren und/oder Fügen oder Trennen von Bauteilen nach der Gattung des Hauptanspruchs. Aus der DE 196 20 195 C1 ist bereits eine derartige Vorrichtung bekannt, die eine Basisvorrichtung aufweist, die an einer Positioniervorrichtung befestigbar ist. An der Basisvorrichtung sind zwei übereinander angeordnete Vibrationsvorrichtungen angeordnet, die in zwei verschiedenen Richtungen quer zur Wirkrichtung der Vorrichtung oszillierende Bewegungen ausführen. An der Basisvorrichtung ist eine Drehvorrichtung mit ihrem Antriebsteil angeordnet. Die Drehvorrichtung ist insbesondere auf der Basisvorrichtung oder an der Positioniervorrichtung angebracht, was dazu führt, daß die Verbindung zwischen der Positioniervorrichtung und der Vorrichtung erschwert ist, da die Drehvorrichtung Bauraum wegnimmt.

Weiterhin treibt die Drehvorrichtung eine an der unteren Vibrationsvorrichtung angeordnete Greifvorrichtung drehbar an. Hierzu ist die Drehvorrichtung mit der Greifvorrichtung über ein Übertragungselement, beispielsweise eine flexible biegsame Welle oder eine kardangelenkartige Kupplung, verbunden. Das Übertragungselement ist ein relativ komplexes und somit teures Bauteil, mit dem dennoch nur relativ kleine Drehmomente übertragbar sind. Insgesamt führt die Anordnung der Drehvorrichtung, des Übertragungselements und der Greifvorrichtung zu einer recht großen und schweren Konstruktion der Vorrichtung. Dadurch muß die Positioniervorrichtung konstruktiv groß ausgelegt werden, wodurch sie teuer wird.

Da die Drehvorrichtung an der Basisvorrichtung und die Greifvorrichtung an einer Vibrationsvorrichtung angeordnet ist, führt dies weiterhin zu einer Relativbewegung zwischen der Drehvorrichtung und der Greifvorrichtung. Dies führt zu einer erhöhten Belastung des Übertragungselements, was mit einem erhöhten Verschleiß verbunden ist. Dies wiederum führt zu verkürzten Wartungsintervallen, was nachteilig bei einem Einsatz der Vorrichtung in einer Serienproduktion ist.

### Vorteile der Erfindung

Die erfindungsgemäße Vorrichtung, insbesondere zum Positionieren und/oder Fügen oder Trennen von Bauteilen mit Merkmalen des Hauptanspruchs hat demgegenüber den Vorteil, daß die Vorrichtung recht kompakt baut, wodurch sie leicht ist. Eine Positioniervorrichtung muß nicht sonderlich groß sein, wodurch zum einen Kosten gespart werden. Zum andern kann die Positioniervorrichtung die Vorrichtung schneller verfahren, wodurch Taktzeiten in einer Serienproduktion reduziert werden können.

Da die Greifvorrichtung in einer Ausführungsform direkt an der Drehvorrichtung befestigt ist, vorzugsweise über eine Flanschverbindung, ist die Verbindung sehr robust und es können recht große Drehmomente übertragen werden. Außerdem erhöht diese Verbindung die Wartungsintervalle, was vorteilhaft beim Einsatz in einer Serienproduktion ist.

Durch die mögliche Lagerung der Drehvorrichtung und der Greifvorrichtung über ein in Wirkrichtung wirkendes Linearlager ist auch eine Feinpostionierung in Wirkrichtung möglich. Eine vorteilhafte Weitergestaltung dieser Lagerung ist es, wenn Federn verwendet werden, die der in Wirkrichtung wirkenden Fügekraft entgegenwirken, da die Fügekraft die Vibrationen beim Feinpositionieren mindern.

Eine günstige Ausbildung eines Linearlagers ergibt sich durch die Verwendung von Säulen und Linearlagern, insbesondere Linear-Kugellager. Hierbei ist es besonders vorteilhaft, wenn zwischen den Säulen und den Linear-Kugellagern ein minimales Spiel vorgesehen ist. Dadurch wird das Linearlager besonders leichtgängig. Außerdem wirkt sich das Spiel positiv auf den Fügevorgang aus.

Eine einfache und stabile Verbindung zwischen der Drehvorrichtung und der Lagerung ergibt sich vorteilhaft, wenn die Drehvorrichtung in einer vorzugsweise U-förmigen Aufnahme angeordnet ist, welche die Linear-Kugellager aufnimmt.

Besonders flexible Einsatzmöglichkeiten ergeben sich, wenn die Vorrichtung an einer Positioniervorrichtung angeordnet ist.

Durch die in den Unteransprüchen aufgeführten Maßnahmen und Merkmale sind besondere Weiterbildungen der im Hauptanspruch angegebenen Vorrichtung beschrieben.

### Zeichnung

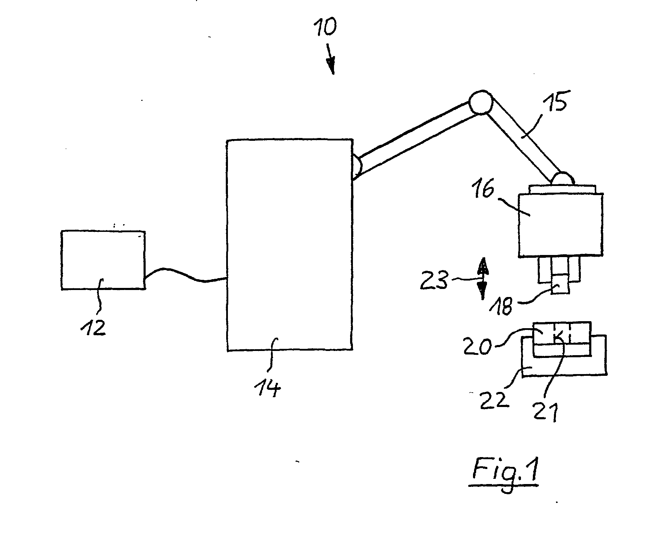

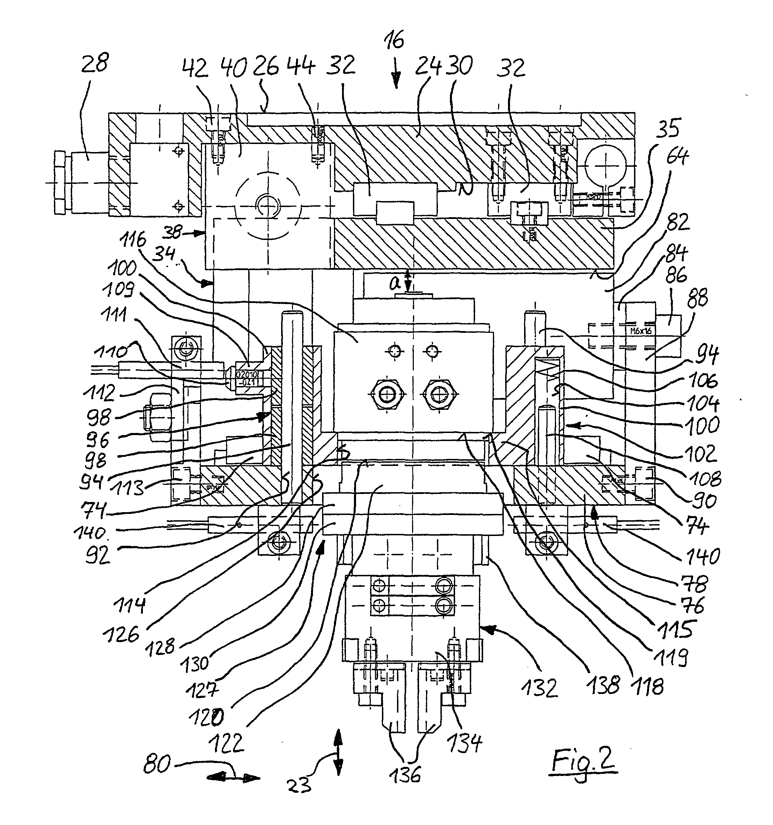

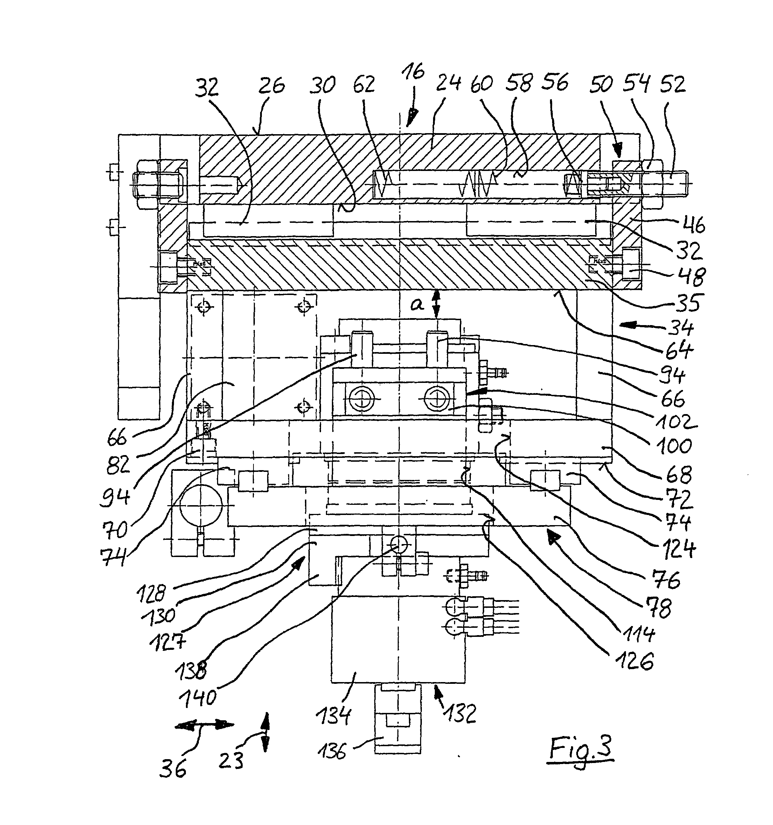

Ein Ausführungsbeispiel der Erfindung ist in der Zeichnung dargestellt und in der nachfolgenden Beschreibung näher erläutert. Es zeigen Figur 1 eine schematisch dargestellte Bearbeitungsstation, Figur 2 eine Vorderansicht einer Vorrichtung mit einigen Ausbrüchen und Figur 3 eine Seitenansicht von links nach der Figur 2 mit einigen Ausbrüchen.

### Beschreibung des Ausführungsbeispiels

Eine in der Figur 1 dargestellte Bearbeitungsstation 10 ist in einer nicht dargestellten Fertigungslinie eingesetzt. Die Bearbeitungsstation 10 weist eine Steuerung 12 zur Steuerung einer Positioniervorrichtung 14 auf. Die Positioniervorrichtung 14 ist im Ausführungsbeispiel als Industrieroboter mit mehreren Achsen dargestellt. Es ist jedoch auch möglich statt dessen eine in einer Achse wirkende Linearachse vorzusehen. Am Arm 15 der Positioniervorrichtung 14 ist eine Vorrichtung 16, insbesondere zum Positionieren und/oder Fügen oder Trennen von Bauteilen angebracht. Die Vorrichtung 16 greift einen Kolben 18, der in einen Zylinder 20 mit einer Bohrung 21, der in einer Aufnahme 22 gespannt ist, gefügt werden soll. Statt den Kolben 18 in den Zylinder 20 zur Montage zu fügen, können der zusammengebaute Kolben 18 und der Zylinder 20 auch getrennt werden, was in einer Fertigungslinie in der Praxis allerdings kaum vorkommt. Statt Bauteile wie den Kolben 18 und den Zylinder 20 ganz ineinander zu fügen, kann es aber auch erforderlich sein Bauteile nur zu positionieren, weil in einer folgenden Bearbeitungsstation beispielsweise die Teile miteinander verklebt oder verschweißt werden. Die Vorrichtung 16 kann jedoch somit zum Positionieren, insbesondere Feinpositionieren und/oder Fügen oder Trennen von Bauteilen, wie zum Beispiel Kolben 18 und Zylindern 20, Wellen und Zahnrädern oder irgendwelche andere Teile, die ein sehr geringes Spiel, zum Beispiel 1µm bis 5µm, aufweisen, verwendet werden, wobei dies unter Vibrationsunterstützung erfolgt. Für diese Vorgänge ist eine Wirkrichtung 23 mit einem Pfeil dargestellt.

Die in den Figuren 2 und 3 detailliert dargestellte Vorrichtung 16 weist zur Verbindung mit der Positioniervorrichtung 14 eine Basisvorrichtung 24 auf, die im wesentlichen plattenförmig ist. Die Verbindung zur Positioniervorrichtung 14 erfolgt über eine Flanschfläche 26. Seitlich ist an einer Seite der Basisvorrichtung 24 ein Kabelanschluß 28 vorgesehen, über den die Verbindung mit der Steuerung 12 erfolgt. An der von der Flanschfläche 26 abgewandten Seite 30 der Basisvorrichtung 24 sind zwei parallel angeordnete Linearlager 32 angeordnet. In den Linearlagern 32 ist eine erste an und für sich bekannte Vibrationsvorrichtung 34 zur Erzeugung einer Vibrationsunterstützung für die Vorrichtung 16 gelagert. Die Linearlager 32 sind hierfür an einer Platte 35 der ersten Vibrationsvorrichtung 34 angebracht, die parallel zur plattenförmigen Basisvorrichtung 24 angeordnet ist. Durch die Linearlager 32 führt die erste Vibrationsvorrichtung 34 oszillierende Bewegungen in einer ersten Längsrichtung 36 aus, die in der Figur 3 mit einem Doppelpfeil dargestellt ist und die quer zur Wirkrichtung 23 gerichtet ist.

Die oszillierenden Bewegungen oder Vibrationen der ersten Vibrationsvorrichtung 34 werden im Ausführungsbeispiel durch einen zum Stand der Technik gehörenden Tauchankermagnetantrieb 38 erzeugt, der mit einer Wechselspannung von entsprechender Frequenz, beispielsweise 10Hz beaufschlagt wird. Das Gehäuse 40 des Tauchankermagnetantriebs 38 ist mit Schrauben 42 und Stiften 44 an der Basisvorrichtung 24 befestigt. Der Tauchankermagnetantrieb 38 ist so angeordnet, daß er nicht oder nicht wesentlich über den Rand der Basisvorrichtung 24 und der Platte 35 der ersten Vibrationsvorrichtung 34 hinausragt, was in vorteilhafter Weise zu einer kompakten Konstruktion der Vorrichtung 16 beiträgt. Der nicht dargestellte Anker des Tauchankermagnetantriebs 38 ist über eine seitlich an der Vorrichtung 16 angeordnete Platte 46 mit Schrauben 48 mit der ersten Vibrationsvorrichtung 34 verschraubt. An der Platte 46 ist eine Einstelleinrichtung 50 angeordnet. Die Einstelleinrichtung 50 weist einen Gewindebolzen 52 auf, der in eine Gewindebohrung der Platte 46 gedreht ist und der mit Hilfe einer Mutter 54 gesichert ist. Der Gewindebolzen 52 reicht mit einem zylindrischen Fortsatz 56 in eine in der Basisvorrichtung 24 ausgebildete Bohrung 58, in der er eine erste Schraubenfeder 60 beaufschlagt. Die erste Schraubenfeder 60 drückt gegen eine zweite Schraubenfeder 62, die ebenfalls in der Bohrung 58 angeordnet ist. Durch die Schraubenfedern 60, 62 ist eine Mittellage der ersten Vibrationsvorrichtung 34 gegeben, die über die Einstellvorrichtung 50 einstellbar ist.

Von der von der Basisvorrichtung 24 abgewandten Seite 64 der ersten Platte 35 der ersten Vibrationsvorrichtung 34 stehen Bügel 66 ab, an denen eine zweite Platte 68 mit Schrauben 70 befestigt ist. Die zweite Platte 68 verläuft parallel zur ersten Platte 35 und zur plattenförmigen Basisvorrichtung 24. An der von den Bügeln 66 abgewandten Seite 72 der zweiten Platte 68 sind zwei parallel angeordnete Linearlager 74 angeordnet. In den Linearlagern 74 ist eine Platte 76 einer zweiten, ebenfalls an und für sich bekannten Vibrationsvorrichtung 78 zur Erzeugung einer Vibrationsunterstützung für die Vorrichtung 16 gelagert. Durch die Linearlager 74 kann die zweite Vibrationsvorrichtung 78 oszillierende Bewegungen in einer zweiten Längsrichtung 80 ausführen, die in der Figur 2 mit einem Doppelpfeil dargestellt ist und die sowohl quer zur Wirkrichtung 23 als auch quer zur ersten Längsrichtung 36 gerichtet ist. Die oszillierenden Bewegungen der zweiten Vibrationsvorrichtung 78 werden so wie die der ersten Vibrationsvorrichtung 34 erzeugt. Das Gehäuse 40 eines zweiten Tauchankermagnetantriebs 82 ist hierfür zwischen den Platten 35, 68 der ersten Vibrationsvorrichtung 34 so angeordnet, daß er nicht oder nicht wesentlich über diese Platten 35, 68 hinausragt, was zu einer kompakten Ausführung der Vorrichtung 16 beiträgt. Der Tauchankermagnetantrieb 82 ist auf der zweiten Platte 68 der ersten Vibrationsvorrichtung 34 befestigt. Am Anker 84 des Tauchankermagnetantriebs 82 ist über eine Schraube 86 ein Bügel 88 befestigt, der über eine weitere Schraube 90 mit der Platte 76 der zweiten Vibrationsvorrichtung 78 verbunden ist. Auf diese Weise können die vom Tauchankermagnetantrieb 82 erzeugten Vibrationen auf die zweite Vibrationsvorrichtung 76 übertragen werden.

In der Platte 76 der zweiten Vibrationsvorrichtung 78 ist in jeder von vier Bohrungen 92 je eine Säule 94 angeordnet. Die vier Säulen 94 sind Teil eines Linearlagers 96, das entlang der Wirkrichtung 23 wirkt und eine Feinpositionierung entlang der Wirkrichtung 23 ermöglicht. Es sollten mindestens zwei Säulen 94 vorgesehen sein. Die Säulen 94 ragen in den zwischen den Platten 35, 68 der ersten Vibrationsvorrichtung 34 vorhandenen Raum. Als weiterer Bestandteil des Linearlagers 96 sind Linear-Kugellager 98 vorgesehen. Auf jeder Säule 94 sind jeweils zwei Linear-Kugellager 98 angeordnet. In der Praxis werden die Säulen 94 und die Linear-Kugellager 98 von einem Hersteller bezogen. Die Säulen 94 haben dabei in den Linear-Kugellagern 98 ein minimales Übermaß von ca. 0,01mm bis 0,03mm. Auf diese Art ist jegliches Spiel aus dem Linearlager 96 herausgenommen. Vorteilhafterweise ist es im Ausführungsbeispiel jedoch so, daß zwischen den Säulen 94 und den Linear-Kugellager 98 ein minimales Spiel, vorzugsweise von 0,01mm bis 0,05mm, vorgesehen ist. Dadurch ist beispielsweise der sogenannte "Stick-Slip-Effekt" eliminiert, einem Ruckeln von Bauteilen aneinander, der beim Übergang von Haft- auf Gleitreibung auftritt. Die Linear-Kugellager 98 sind weiterhin vorzugsweise in den beiden U-Schenkeln 100 einer U-förmigen Aufnahme 102 angeordnet, wodurch auch die Säulen 94 in den Schenkeln 100 angeordnet sind.

Idealerweise sind in beiden U-Schenkeln 100 zwischen den Säulen 94 Bohrungen 104 ausgebildet. In jeder Bohrung 104 ist eine in der Figur 2 angedeutete schraubenförmige Druckfeder 106 angeordnet, die gegen den Grund der Bohrung 104 und die Platte 76 drückt und deren Federkraft in bekannter Weise einstellbar ist. Die Druckfedern 106 wirken einer Fügekraft entgegen. Die Fügekraft wird im wesentlichen durch die Gewichtskraft der Linear-Kugellager 98, der Aufnahme 102, der Drehvorrichtung 116 und der Greifvorrichtung 132 erzeugt, wobei noch ein Anteil von der Positioniervorrichtung 14 beim Aufsetzen auf den Zylinder 20 hinzukommt. Zur Sicherung der Druckfedern 106 gegen ein Verkanten ist ein Bolzen 108 vorgesehen, der in der Platte 76 befestigt ist und in die Bohrung 104 ragt.

An einem U-Schenkel 100 ist seitlich eine Aufnahme 109 ausgebildet, in der ein Signalgeber in Form eines Bolzens 110 angeordnet ist. Der Bolzen 110 beaufschlagt einen Näherungsschalter 111, der in einem Bügel 112 befestigt ist, der mit Hilfe einer Schraube 113 mit der Platte 76 und somit mit der zweiten Vibrationsvorrichtung 78 verbunden ist. Bewegt sich die Aufnahme 102 entlang des Linearlagers 96, so beaufschlagt der Bolzen 110 den Näherungsschalter 110, der Steuersignale an die Steuerung 12 abgibt.

In einem zentrischen Durchbruch 114 im Quersteg 115 der U-förmigen Aufnahme 102 ist eine Drehvorrichtung 116 befestigt, die pneumatisch betätigbar ist, wobei aber auch eine elektrische Betätigung denkbar ist. Eine pneumatisch betätigte Drehvorrichtung 116 ist zum einen jedoch leichter, wodurch die Positioniervorrichtung 14 kleiner dimensioniert werden kann. Zum andern ist diese Ausgestaltung auch vorteilhafter beim Einsatz der Vorrichtung 16 in einer Serienproduktion. Die Drehvorrichtung 116 weist einen pneumatisch betätigbaren Antriebsteil 117 auf, der drehfest mit einer Schulter 118 auf einer Ringfläche 119 um den Durchbruch 114 sitzt. Der Antriebsteil 117 ist im Bereich zwischen dem Quersteg 115 der U-förmigen Aufnahme 102 und der Platte 35 der ersten Vibrationsvorrichtung 34 angeordnet, wobei zwischen der Platte 35 und dem Antriebsteil 117 der Drehvorrichtung 116 ein Abstand a vorgesehen ist, der etwas größer als der durch das Linearlager 96 gegebene Hub ist, wodurch die Drehvorrichtung 116 nicht an die Platte 35 stoßen kann.

Die Drehvorrichtung 116 ist also an der zweiten Vibrationsvorrichtung 78 angeordnet, wobei die Drehvorrichtung 116 im Ausführungsbeispiel über die Aufnahme 102 im Linearlager 96 gelagert ist, wobei das Linearlager an der zweiten Vibrationsvorrichtung 78 vorgesehen ist und entlang der Wirkrichtung 23 wirkt.

Im Bereich des Durchbruchs 114 des Querstegs 115 verläuft die Drehebene 120 der Drehvorrichtung 116. Der Drehteil 122 der Drehvorrichtung 116 ragt durch einen Durchbruch 124 der Platte 68 der ersten Vibrationsvorrichtung 34 und einen Durchbruch 126 der Platte 76 der zweiten Vibrationsvorrichtung 78 aus der Vorrichtung 16 heraus. Vorzugsweise über eine Flanschverbindung 127, die aus einem ersten Flansch 128, der Teil der Drehvorrichtung 116 ist und einem zweiten Flansch 130, der Teil einer Greifvorrichtung 132 ist, ist die Greifvorrichtung 132 direkt an der Drehvorrichtung 116 befestigt, ohne daß ein weiteres Übertragungselement vorgesehen ist, daß sowohl an der Drehvorrichtung 116 und der Greifvorrichtung 132 zusätzlich angekuppelt werden müßte. Alternativ ist es auch denkbar, daß die Greifvorrichtung 132 und die Drehvorrichtung 116 als eine Komponente ausgeführt sind. Die Greifvorrichtung 132 ist vorteilhafterweise pneumatisch betätigbar. An den Flansch 130 der Greifvorrichtung 132 schließt sich ein Pneumatikteil 134 an, an dem wiederum zwei vom Pneumatikteil 134 betätigte Spannelemente 136 angeordnet sind. Die Spannelemente 136 sind quer zur Wirkrichtung verschiebbar angeordnet und dienen dem Spannen des Kolbens 18.

Am Flansch 130 der Greifvorrichtung 132 ist noch ein Signalgeber in Form eines halbringförmigen Nockens 138 angeordnet, der zwei Näherungsschalter 140 beaufschlagt. Diese geben Steuersignale an die Steuerung 12 ab, wodurch diese durch entsprechende Steuerung des Antriebsteils 117 die Drehvorrichtung 116 und somit die Greifvorrichtung 132 Drehungen von ±45° durchführen läßt. Es ist vorteilhaft, daß die Drehvorrichtung 116 die Greifvorrichtung 132 nicht umdrehbar antreibt. Insbesondere ist es von Vorteil, daß der Drehbereich der Drehvorrichtung 116 weniger als ±180° beträgt, da ansonsten Anschlußschläuche des Pneumatikteils sehr lange ausfallen müßten und da somit auch keine Probleme mit eventuellen Beschädigungen der Anschlußschläuche des Pneumatikteils 134 der Greifvorrichtung 132 auftreten. Im Ausführungsbeispiel beträgt der Drehbereich der Greifvorrichtung 132 ±45°, was bezüglich der Funktion der Greifvorrichtung 132 während eines Fügevorgangs eines Kolbens 18 in eine Bohrung 20 ein sehr guter Wert ist.

Beim Fügen des Kolbens 18 in die Bohrung 21 des Zylinders 20 wird die Vorrichtung 16 mit dem in der Greifvorrichtung 132 gespannten Kolben 18 zunächst durch den Arm 15 der Positioniervorrichtung 14 an den Zylinder 20 verfahren. Dann wird der Kolben 18 auf den Zylinder 20 aufgesetzt. Aufgrund der Druckfedern 106, die entgegen der Fügekraft wirken, ist die resultierende Kraft auf den Zylinder 20 fast Null; jedenfalls ist sie auf den Fügevorgang einstellbar. Da die Positioniervorrichtung 14 die Vorrichtung 16 weiterhin in Richtung des Zylinders 20 verfährt, bewegt sich die Greifvorrichtung 132 und die Drehvorrichtung 116 entlang der Säulen 94 des Linearlagers 96, bis der Bolzen 110 den Näherungsschalter 111 beaufschlagt und dieser ein Steuersignal an die Steuerung 12 abgibt. Diese steuert nun die Vibrationsvorrichtung 34, 78 so, daß diese oszillierende Bewegungen entlang der Längsrichtungen 36, 80 ausführen. Die Amplituden dieser Bewegungen werden dabei ständig geändert und so überlagert, daß der Kolben 18 auf dem Zylinder 20 ein Suchmuster abfährt, bis er die Bohrung 21 des Zylinders 20 gefunden hat. Die Vorrichtung 16 sorgt hier also für eine Feinpositionierung des Kolbens 18 auf dem Zylinder 20.

Gleichzeitig mit dem Start der oszillierenden Bewegungen der Vibrationsvorrichtungen 34, 78 gibt die Steuerung 12 an die Drehvorrichtung 116 ein Signal, einen Drehvorgang zu beginnen, wobei die Drehvorrichtung 116 Drehungen von ±45° ausführt. Die Stellungen +45° bzw. -45° werden hierbei von den Näherungsschaltern 140 erkannt, die vom halbringförmigen Nocken 138 beaufschlagt werden. Durch ein entsprechendes Signal an die Steuerung 12 werden dann die Gegendrehungen eingeleitet. Es ist auch möglich den Drehvorgang nach der Durchführung des Suchmusters zu beginnen, jedoch ist die gleichzeitige Durchführung vorteilhafter.

Im Moment des Eindringens des Kolbens 18 in die Bohrung 21 des Zylinders 20 bzw. wenn der Kolben 18 in die Bohrung 21 rutscht, bewegt sich die Greifvorrichtung 132 mit der Drehvorrichtung 116 ein wenig entlang der Säulen 94 des Linearlagers 96 zurück; die Bewegung entlang des Linearlagers 96 stellt somit eine Feinpositionierung dar. Diese Bewegung des Linearlagers 96 wird wiederum vom Näherungsschalter 111 aufgrund der Bewegung des Bolzens 110 detektiert. Auf diese Weise können Rückschlüsse auf die Art des Eindringens des Kolbens 18 in die Bohrung 21 gewonnen werden, die in der Steuerung 12 auswertbar sind und mit denen der Fügevorgang visualisierbar, kontrollierbar und somit optimierbar ist. Die Drehbewegung während des Suchens und des Eindringens verhindert ein Verkanten des Kolbens 18 und sorgt dafür daß immer Gleitreibung statt Haftreibung wirkt, wodurch ein "Stick-Slip-Effekt" verhindert wird.

Die Positioniervorrichtung 14 schiebt den Kolben 18 über die Vorrichtung 16 weiter in die Bohrung 21, dies entspricht einer Nachführbewegung. Die Vibrationen und Drehbewegungen der Vorrichtung 16 sowie die Nachführbewegungen der Positioniervorrichtung 14 werden solange durchgeführt, bis der Kolben 18 und der Zylinder 20 vollständig ineinander gefügt sind.

Durch die oszillierenden Bewegungen entlang der Längsrichtungen 36, 80 der Vibrationsvorrichtung 34, 78, was einer Vibrationsunterstützung beim Fügevorgang entspricht, in Verbindung mit den Drehbewegungen der Drehvorrichtung 116 und den Nachführbewegungen der Positioniervorrichtung 14 wird der Kolben 18 somit in die Bohrung 21 des Zylinders 20 gefügt.

Beim Fügevorgang erweist es sich als vorteilhaft, wenn die Säulen 94 und die Linear-Kugellager 98 ein minimales Spiel von wenigen Hundertstel Millimetern haben, da noch minimale Bewegungen der Greifvorrichtung 132 und der Drehvorrichtung 116 quer zur Wirkrichtung 23 möglich sind, was den Fügevorgang erleichtert. Zum andern ist dadurch der "Stick-Slip-Effekt" eliminiert, wodurch der Fügevorgang nochmals optimiert wird.

Das Linearlager 96 entspricht also einer Vorrichtung zur Feinpositionierung, die entlang der Wirkrichtung 23 der Vorrichtung 16 wirkt. Insbesondere durch die Verwendung der Druckfedern 106 läßt sich die Fügekraft einstellen, wodurch der Fügevorgang optimierbar ist. Statt der Verwendung von Druckfedern 106 ist es auch denkbar, einen Tauchankermagnetantrieb zu verwenden, um damit die Bewegungen des Kolbens 18 beim Eindringen in die Bohrung 21 des Zylinders 20 zu optimieren. Es ist als weitere Alternative auch möglich, einen Pneumatikzylinder zu verwenden.

Die beschriebene Anordnung der Tauchankermagnetantriebe 38, 82 ermöglicht es in vorteilhafter Weise, Bauraum für das Linearlager 96, die Aufnahme 102 sowie die Drehvorrichtung 116 zu schaffen und zu nutzen, so daß die Vorrichtung 16 dennoch sehr kompakt und somit auch leicht ist. Dadurch eignet sich die Vorrichtung 16 besonders gut für den Einsatz in einer Serienproduktion.

## Patentansprüche

1. Vorrichtung (16), insbesondere zum Positionieren und/oder Fügen oder Trennen von Bauteilen (18, 20) unter Vibrationsunterstützung wobei die Vorrichtung (16) mit einer Basisvorrichtung (24) zur Befestigung an einer Positioniervorrichtung (14), mit einer ersten in einer ersten Längsrichtung (36) quer zu einer Wirkrichtung (23) oszillierenden ersten Vibrationsvorrichtung (34), die an der Basisvorrichtung (24) gelagert ist, mit einer zweiten in einer zweiten Längsrichtung (80) quer zur Wirkrichtung (23) und quer zur ersten Längsrichtung (36) oszillierenden Vibrationsvorrichtung (78), die an der ersten Vibrationsvorrichtung (34) gelagert ist, und mit einer Drehvorrichtung (116), die eine Greifvorrichtung (132) drehbar antreibt, versehen ist, **dadurch gekennzeichnet, daß** die Drehvorrichtung (116) mit ihrem Drehantriebsteil an der zweiten Vibrationsvorrichtung (78) angeordnet ist.

2. Vorrichtung (16) nach Anspruch 1, **dadurch gekennzeichnet, daß** die Greifvorrichtung (132) an der Drehvorrichtung (116), vorzugsweise über eine Flanschverbindung (127), befestigt ist.

3. Vorrichtung (16) nach Anspruch 1 oder 2, **dadurch gekennzeichnet, daß** an der zweiten Vibrationsvorrichtung (78) ein entlang der Wirkrichtung (23) wirkendes Linearlager (96) vorgesehen ist, in dem die Drehvorrichtung (116) gelagert ist.

4. Vorrichtung (16) nach einem der Ansprüche 1 bis 3, **dadurch gekennzeichnet, daß** mindestens ein Federelement (106) vorgesehen ist, das der entlang der Wirkrichtung (23) wirkenden Fügekraft entgegenwirkt.

5. Vorrichtung (16) nach einem der Ansprüche 3 bis 4, **dadurch gekennzeichnet, daß** das Linearlager (96) aus mindestens zwei Säulen (94) besteht, die an der zweiten Vibrationsvorrichtung (78) befestigt sind, und Linear-Kugellagern (98), die um die mindestens zwei Säulen (94) angeordnet sind, und daß die Drehvorrichtung (116) mit den Linear-Kugellagern (98) verbunden ist.

6. Vorrichtung (16) nach Anspruch 5, **dadurch gekennzeichnet, daß** die Drehvorrichtung (116) im Quersteg (115) einer U-förmigen Aufnahme (102) befestigt ist, in deren U-Schenkel (100) die Linear-Kugellager (98) angeordnet sind.

7. Vorrichtung (16) nach Anspruch 5 oder 6, **dadurch gekennzeichnet, daß** vier Säulen (94) vorgesehen sind und daß an jeder Säule (94) zwei Linear-Kugellager (98) angeordnet sind.

8. Vorrichtung (16) nach einem der Ansprüche 5 bis 7, **dadurch gekennzeichnet, daß** zwischen den Säulen (94) und den Linear-Kugellager (98) ein minimales Spiel vorgesehen ist.

9. Vorrichtung (16) nach einem der Ansprüche 1 bis 8, **dadurch gekennzeichnet, daß** die Vorrichtung (16) an einer Positioniervorrichtung (14) angeordnet ist.

10. Bearbeitungsstation (10), bestehend aus einer Steuerung (12), einer Positioniervorrichtung (14) und einer Vorrichtung (16) nach einem der Ansprüche 1 bis 9.

## Claims

1. Device (16), in particular for the positioning and/or joining or separation of components (18, 20), with vibration assistance, the device (16) being provided with a base device (24) for fastening to a positioning device (14), with a first vibration device (34) which oscillates in a first longitudinal direction (36) transversely to an operative direction (23) and is mounted on the base device (24), with a second vibration device (78) which oscillates in a second longitudinal direction (80) transversely to the operative direction (23) and transversely to the first longitudinal direction (36) and is mounted on the first vibration device (34), and with a rotary device (116) which drives a gripping device (132) rotatably, **characterized in that** the rotary device (116) is arranged with its rotary drive part on the second vibration device (78).

2. Device (16) according to Claim 1, **characterized in that** the gripping device (132) is fastened to the rotary device (116), preferably via a flanged connection (127).

3. Device (16) according to Claim 1 or 2, **characterized in that** a linear bearing (96) which acts in the operative direction (23) and in which the rotary device (116) is mounted is provided on the second vibration device (78).

4. Device (16) according to one of Claims 1 to 3, **characterized in that** at least one spring element (106) is provided, which counteracts the joining force acting in the operative direction (23).

5. Device (16) according to one of Claims 3 and 4, **characterized in that** the linear bearing (96) consists of at least two columns (94), which are fastened to the second vibration device (78), and of linear ball bearings (98), which are arranged around the at least two columns (94), and **in that** the rotary device (116) is connected to the linear ball bearings (98).

6. Device (16) according to Claim 5, **characterized in that** the rotary device (116) is fastened in the crosspiece (115) of a U-shaped receptacle (102), in the U-legs (100) of which are arranged the linear ball bearings (98).

7. Device (16) according to Claim 5 or 6, **characterized in that** four columns (94) are provided, and **in that** two linear ball bearings (98) are arranged on each column (94).

8. Device (16) according to one of Claims 5 to 7, **characterized in that** a minimal play is provided between the columns (94) and the linear ball bearings (98) .

9. Device (16) according to one of Claims 1 to 8, **characterized in that** the device (16) is arranged on a positioning device (14).

10. Machining station (10), consisting of a control (12), of a positioning device (14) and of a device (16) according to one of Claims 1 to 9.

## Revendications

1. Appareil (16), notamment pour positionner et/ou assembler ou démonter des composants (18, 20) avec l'assistance de vibrations, appareil (16) qui comporte
- un dispositif de base (24) pour fixation à un dispositif de positionnement (14)
- monté sur le dispositif de base (24) un premier dispositif vibrant (34) oscillant selon une première direction longitudinale (36) perpendiculaire à une direction d'action (23),
- monté sur le premier dispositif vibrant (34), un second dispositif vibrant (78) qui oscille selon une seconde direction longitudinale (80) perpendiculaire à la direction d'action (23),
- un dispositif de rotation (116) entraînant en rotation un dispositif de saisie (132),
**caractérisé en ce que**
le dispositif de rotation (116) est monté par sa partie d'entraînement en rotation sur le second dispositif vibrant (78).

2. Appareil (16) selon la revendication 1,
**caractérisé en ce que**
le dispositif de saisie (132) est fixé sur le dispositif de rotation (116) de préférence par une liaison à brides (127).

3. Appareil (16) selon la revendication 1 ou 2,
**caractérisé en ce que**
sur le second dispositif vibrant (78) est monté un palier linéaire (96) à mouvement parallèle à la direction d'action (23) et sur lequel est monté le dispositif de rotation (116).

4. Appareil (16) selon l'une des revendications 1 à 3,
**caractérisé en ce qu'**
il est prévu au moins un élément élastique (106) dont la force s'oppose à la force d'assemblage exerçant selon la direction d'action (23).

5. Appareil (16) selon la revendication 3 ou 4,
**caractérisé en ce que**
le palier linéaire (96) est composé d'au moins deux colonnes (94) fixées au second dispositif vibrant (78) et de paliers linéaires à billes (98) montés sur les colonnes (94), le dispositif de rotation (116) étant relié aux paliers linéaires à billes (98).

6. Appareil (16) selon la revendication 5,
**caractérisé en ce que**
le dispositif de rotation (116) est fixé sur la barrette transversale (115) d'un logement (102) en forme d'U et les paliers linéaires à billes (98) sont montés dans les ailes (100) de l'U.

7. Appareil (16) selon la revendication 5 ou 6,
**caractérisé en ce que**
quatre colonnes (94) sont prévues et sur chaque colonne (94) sont montés deux paliers linéaires à billes (98).

8. Appareil (16) selon l'une des revendications 5 à 7,
**caractérisé par**
un jeu minimal prévu entre les colonnes (94) et les paliers linéaires à billes (98).

9. Appareil (16) selon l'une des revendications 1 à 8,
**caractérisé en ce que**
l'appareil (16) est monté sur un dispositif de positionnement (14).

10. Poste d'usinage (10) composé d'une commande (12), d'un dispositif de positionnement (14) et d'un appareil (16) selon les revendications 1 à 9.
